# EUROPEAN PATENT SPECIFICATION

(11) **EP 2 674 736 B1**
(45) Date of publication and mention of the grant of the patent: **17.05.2017**
(21) Application number: 13171389.3
(22) Date of filing: 11.06.2013
(51) Int. Cl.: G01K 1/14

(54) **Detection device to detect the temperature in a cooking apparatus**
Detektionsvorrichtung zur Detektion der Temperatur in einer Kochvorrichtung
Dispositif de détection pour détecter la température dans un appareil de cuisson

(30) Priority: 12.06.2012 IT UD20120112
(43) Date of publication of application: 18.12.2013
(73) Proprietor: DE' LONGHI APPLIANCES SRL CON UNICO SOCIO, 31100 Treviso (IT)
(72) Inventor: De' Longhi, Giuseppe, 31100 Treviso (IT); Mazzon, Renzo, 31057 Silea (TV) (IT)
(74) Representative: Petraz, Gilberto Luigi

(56) References cited:
- GB-A- 2 441 508
- US-A1- 2004 258 129
- US-A1- 2009 139 324

## Description

### FIELD OF THE INVENTION

The present invention concerns a detection device to detect the temperature in a cooking apparatus, of the type having a container with which electric means are associated, suitable to generate heat to heat liquids and foods and contained in the container. The detection device to detect the temperature is stably associated with the container in proximity to the electric means and is watertight to allow it to be washed, together with the container, even in a dishwasher.

### BACKGROUND OF THE INVENTION

From the international patent application WO 2011/098323 A2, property of the present Applicant, a cooking apparatus is known, of the type having a container with which an electric resistance is associated, suitable to heat it so as to cook or heat liquids and foods contained therein. The container is also provided inside with some rotating blades, able to cut and mince the food introduced therein. Furthermore, the container and the associated electric resistance are suitable to be positioned, removably, on a base in which an electric motor is disposed, to make the rotating blades rotate, and an electric feed circuit for the electric resistance.

US 2004/258129 discloses a digital thermometer for a dishwasher comprising a housing in which both a probe including a temperature-sensing element and a temperature conversion logic are housed. The housing comprises two parts and a watertight seal is provided between the two parts of the housing. Moreover, the temperature conversion logic is encapsulated by a material having low thermal conductivity. Further, an insulating member like foam is disposed inside the cavity.

One disadvantage of the state of the art is that, where devices to detect the temperature of the container and/or the plate associated with the electric resistance are provided, it is necessary to ensure they are watertight even in situations where the risk of infiltrations of water is very high, such as for example when they are washed in the dishwasher.

One purpose of the present invention is to supply the apparatus for cooking or heating foods with a detection device, simple and reliable, suitable to detect the temperature of the container, so as to be able to consequently regulate the feed of the electric resistance associated with the container.

Another purpose of the present invention is to obtain a device to detect the temperature of the container which can remain associated with it even when it is removed from its base, and which is watertight so that it can be washed, even in the dishwasher, together with the container, without the detection device getting damaged due to the washing.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes, a detection device according to the present invention to detect the temperature, in a totally new and original way, in a cooking apparatus, comprises a temperature sensor provided with a containing element and disposed in proximity or contact with a container for containing foods to be cooked or heated, with which an electric resistance is associated.

The temperature sensor can be for example a thermistor of a known type, either Negative Temperature Coefficient (NTC) or Positive Temperature Coefficient (PTC), and is disposed inside its own containing element.

According to one embodiment of the present invention, sealing means are associated with the containing element of the temperature sensor, to achieve the watertight seal of the temperature sensor with respect to the outside.

According to one form of embodiment the sealing means are interposed between the containing element of the temperature sensor and a closing element of the latter, and comprise a tube made of elastic material, hollow inside to receive a rear part of the temperature sensor and the connection wires, and suitable to be inserted axially between the containing element and the associated closing element.

Moreover, thrust means are provided to keep the tube both radially and axially mechanically pressed against the rear part of the temperature sensor.

According to another characteristic feature of the present invention, the thrust means comprise a plurality of flexible fins suitable to be disposed longitudinally around the tube and suitable to cooperate with a conical internal surface of the closing element.

According to another feature of the present invention, an intermediate element is interposed between the containing element of the temperature sensor and the corresponding closing element. In this case, the sealing means also comprise a ring made of elastic material interposed between the containing element and the intermediate element.

According to a variant, the sealing means comprise a covering element which incorporates at least a part of the containing element and a terminal part of the temperature sensor protruding from the containing element.

The covering element is advantageously made of double grafted rubber.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a lateral schematic view of a detection device according to the present invention, installed in a container of a cooking apparatus;

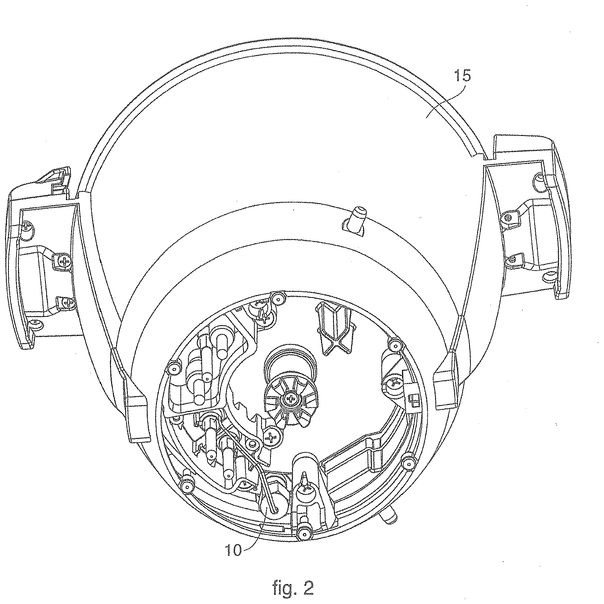

- fig. 2 is a perspective view from below of the container of the cooking apparatus in fig. 1, in which a detection device according to the present invention is installed;
- fig. 3 is an enlarged detail of fig. 1;
- fig. 4 is a lateral view of a detection device according to the present invention;
- fig. 5 is a longitudinal section of the detection device in fig. 4;
- fig. 6 is an exploded view of the detection device in fig. 4;
- fig. 7 is a perspective view of a variant of a detection device according to the present invention.

### DETAILED DESCRIPTION OF SOME FORMS OF EMBODIMENT

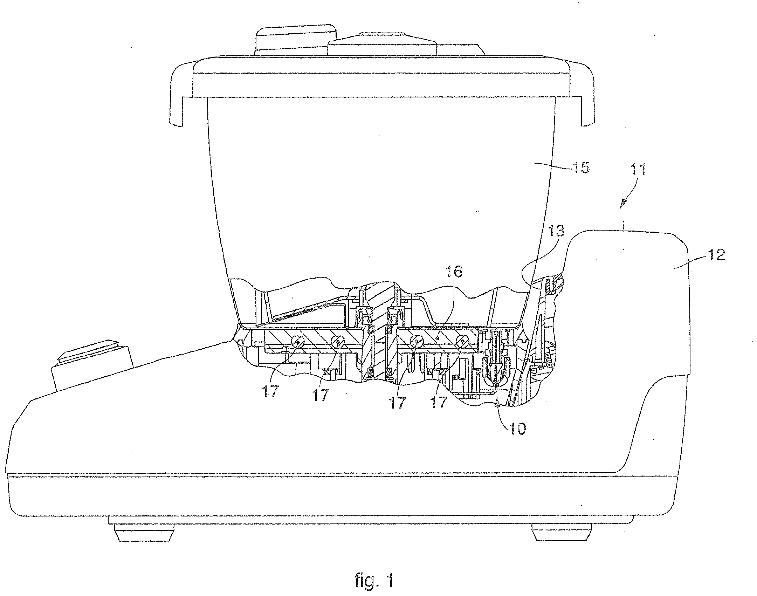

With reference to fig. 1, a detection device 10 according to the present invention is suitable to detect the temperature in a cooking apparatus 11 of a known type, for example of the type described in the international patent application WO 2011/098323 A2 as above, incorporated here as a reference.

The cooking apparatus 11 comprises a base 12 provided with an upper cavity 13 in which a container 15 is suitable to be removably disposed, on the lower part of which a heating plate 16 is disposed, in which an electric resistance 17 is incorporated.

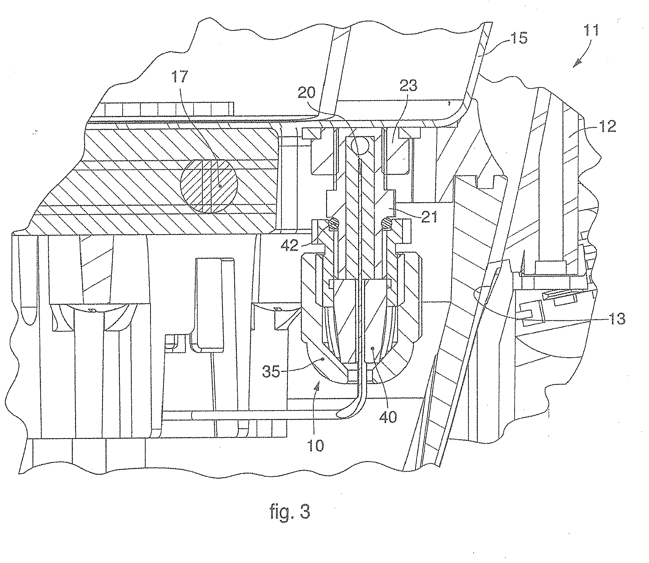

The detection device 10 (figs. 3, 4, 5 and 6) comprises a temperature sensor 20, which in this case is an NTC type thermistor, which is incorporated in its own containing element 21, provided externally and in its upper part with a threading 22, by means of which a corresponding threaded ring 23 is suitable to be screwed (fig. 3), disposed in the lower part of the container 15. A temperature sensor 20, with corresponding containing element 21 of this type, are already available on the market.

The lower and external part of the containing element 21 is instead modified to be provided with a second threading 25, on which a corresponding internal threading 26 of an intermediate element 29 is suitable to be screwed, having a through axial cavity 30 and, at the lower part, flexible fins 31 disposed longitudinally.

The intermediate element 29 is also provided with an external threading 32, on which a corresponding internal threading 33 of a closing element 35 is suitable to be screwed, having a through cavity 36, in which the lower part of the temperature sensor 20 is suitable to pass, with play.

A first sealing element is suitable to be inserted into the through axial cavity 30 of the intermediate element 29 and mechanically pressed between the lower part of the containing element 21 and a conical internal surface 41 of the closing element 35. In this case, the first sealing element is a tube 40, made of elastic material such as rubber, or other similar material, with a truncated cone shape, hollow inside, held in position by the flexible fins 31 and inside which the lower part of the temperature sensor 20 is suitable to be inserted, with precision.

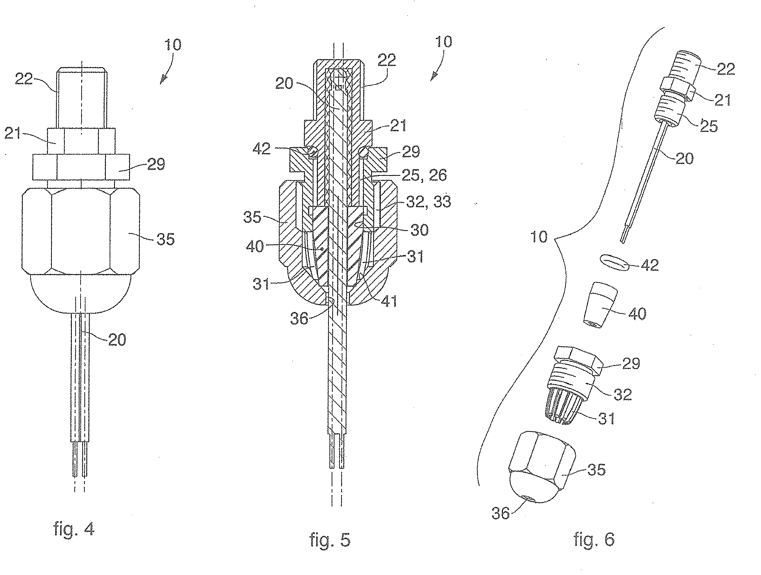

A second sealing element, in this case shown in figs. 5 and 6, is interposed between the lower part of the containing element 21 and the upper part of the intermediate element 29. In this case the second sealing element is a ring 42 made of elastic material, such as rubber or other similar material, with a toroid cross section, of the type known as O-ring.

According to a variant form of embodiment, not shown here, the second sealing element is not present.

In this way, when the intermediate element 29 is screwed onto the containing element 21, with the possible interposition of the ring 42, and the closing element 35 is screwed onto the intermediate element 29, with the interposition of the tube 40, a perfect and reliable watertight seal of the temperature sensor 20 is obtained. This is thanks to the pressure exerted by the flexible fins 31 on the tube 40, due to the mechanical thrust that they receive from the conical internal surface 41 of the closing element 35. Moreover, the same conical internal surface 41 also mechanically thrusts the tube 40 upward, holding it against the lower part of the containing element 41.

According to a variant, not shown in the drawings but easily understood by the person of skill in the art, the containing element 21 and the closing element 35 could be shaped so as to be screwed to each other, without the interposition of the intermediate element 29. In this case, as we said, the second sealing element, namely the ring 42, is not necessary, and the watertight seal is in any case guaranteed by the tube 40.

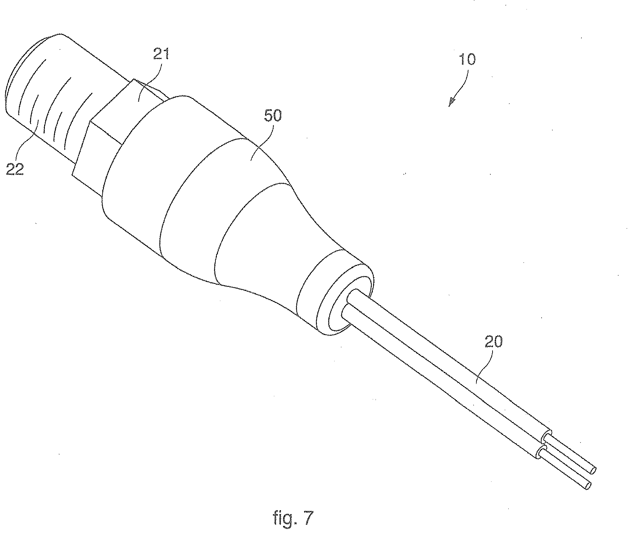

According to another variant, shown in fig. 7, the watertight seal around the containing element 21 is obtained by means of a covering element 50, which incorporates at least a part of the containing element 21 and a terminal part of the temperature sensor 20 protruding therefrom.

The covering element 50 is made for example of double grafted rubber. Alternatively, the covering element 50 can be made of silicone, resin, plastic material or other material suitable to guarantee the watertight seal.

The detection device 10 can therefore be installed simply and removably on the threaded ring 23 of the container 15 and can be removed together with the latter from the base 12 of the cooking apparatus 11.

It is clear that modifications and/or additions of parts may be made to the detection device 10 as described heretofore, without departing from the field and scope of the present invention.

It is also clear that, although the present invention has been described with reference to some specific examples, a person of skill in the art shall certainly be able to achieve many other equivalent forms of devices to detect the temperature of a cooking apparatus, having the characteristics as set forth in the claims and hence all coming within the field of protection defined thereby.

## Claims

1. Detection device to detect the temperature in a cooking apparatus (11), said cooking apparatus having a container (15) suitable to contain the food to be cooked or heated, to which container (15) an electric resistance (17) is associated, said detection device comprising a temperature sensor (20) suitable to be disposed in proximity of, or in contact with, said container (15) and said temperature sensor (15) being provided with a containing element (21), wherein sealing means are associated to said containing element (21) to achieve the watertight seal of said temperature sensor (20), **characterized in that** said sealing means are interposed between said containing element (21) and a closing element (35) and comprise a tube (40) made of elastic material, hollow inside to receive a terminal part of said temperature sensor (20), said tube (40) being inserted axially between said containing element (21) and said closing element (35), thrust means being provided to keep said tube (40) radially and mechanically pressed against said terminal part of said temperature sensor (20), wherein said containing element (21) is provided in its lower and external part with a threading (25) onto which an internal threading of said closing element (35) can be screwed, whereby the screwing of the closing element (35) on the containing element (21) determines the radial and mechanical pressure of the tube (40) against the terminal part of the temperature sensor (20) .

2. Detection device to detect the temperature in a cooking apparatus (11), said cooking apparatus having a container (15) suitable to contain the food to be cooked or heated, to which container (15) an electric resistance (17) is associated, said detection device comprising a temperature sensor (20) suitable to be disposed in proximity of, or in contact with, said container (15) and said temperature sensor (15) being provided with a containing element (21), wherein sealing means are associated to said containing element (21) to achieve the watertight seal of said temperature sensor (20), **characterized in that** said sealing means are interposed between said containing element (21) and a closing element (35) and comprise a tube (40) made of elastic material, hollow inside to receive a terminal part of said temperature sensor (20), said tube (40) being inserted axially between said containing element (21) and said closing element (35), thrust means being provided on an intermediate element (29) interposed between said containing element (21) and said closing element (35), and disposed longitudinally around said tube (40) for cooperating with a conical internal surface (41) of said closing element (35), to keep said tube (40) radially and mechanically pressed against said terminal part of said temperature sensor (20), wherein said containing element (21) is provided in its lower and external part with a threading (25) onto which an internal threading of said closing element (35) can be screwed, whereby the screwing of the closing element (35) on the containing element (21) determines the radial and mechanical pressure of the tube (40) against the terminal part of the temperature sensor (20) .

3. Device as in claim 2, **characterized in that** said tube (40) has a truncated cone shape and said thrust means comprise a plurality of flexible fins (31) provided on said intermediate element (29).

4. Device as in claim 3, **characterized in that** said conical internal surface (41) of said closing element (35) is suitable to mechanically thrust said tube (40) against the lower part of said containing element (21).

5. Device as in claim 2, 3 or 4, **characterized in that** said sealing means also comprise a ring (42) made of elastic material interposed between said containing element (21) and said intermediate element (29).

6. Device as in claim 3, **characterized in that** said flexible fins (31) are disposed in the lower part of said intermediate element (29).

7. Device as in claim 3, **characterized in that** the lower part of said containing element (21) is provided with the external threading (25), onto which a corresponding internal threading (26) of said intermediate element (29) is suitable to be screwed, and **in that** said intermediate element (29) is provided with an external threading (32), onto which a corresponding internal threading (33) of said closing element (35) is suitable to be screwed.

8. Device as in claim 2, **characterized in that** said intermediate element (29) is provided with a through axial cavity (30) in which both a part of said containing element (21) and a part of said tube (40) are suitable to be housed.

9. Device as in any claim hereinbefore, **characterized in that** said sealing means comprise a covering element (50) which incorporates at least a part of said containing element (21) and a terminal part of said temperature sensor (20) protruding from said containing element (21).

10. Device as in claim 9, **characterized in that** said covering element (50) is made of double grafted rubber.

## Patentansprüche

1. Detektionsvorrichtung zur Detektion der Temperatur in einem Kochtopf (11), wobei dieser Kochtopf einen Container (15) aufweist, der geeignet ist, Nahrung, die gekocht oder erhitzt werden soll, aufzunehmen, mit welchem Container (15) ein elektrischer Widerstand (17) verbunden ist, wobei diese Detektionsvorrichtung einen Temperatursensor (20) umfasst, der geeignet ist, in der Nähe des oder in Kontakt mit dem Container (15) angeordnet zu sein, und wobei der Temperatursensor (15) mit einem aufnehmenden Element (21) versehen ist, wobei Dichtmittel mit diesem aufnehmenden Element (21) verbunden sind, um eine wasserdichte Dichtung dieses Temperatursensors (20) zu erreichen, **dadurch gekennzeichnet, dass** diese Dichtmittel zwischen dem aufnehmenden Element (21) und einem Schließelement (35) positioniert sind und einen Tubus (40), der aus elastischem Material geformt ist, umfassen, wobei der hohle Innenraum geeignet ist, einen Endabschnitt dieses Temperatursensors (20) aufzunehmen, wobei der Tubus (40) axial zwischen dieses aufnehmende Element (21) und dieses Schließelement (35) eingeführt ist, wobei Vorschubmittel vorgesehen sind, um diesen Tubus (40) radial und mechanisch gegen diesen Endabschnitt dieses Temperatursensors (20) gedrückt zu halten, wobei dieses aufnehmende Element (21) in seinem unteren und äußeren Abschnitt mit einem Gewinde (25) versehen ist, auf welches ein Innengewinde des Schließelements (35) aufgeschraubt werden kann, wobei das Aufschrauben des Schließelements (35) auf das aufnehmende Element (21) den radialen und mechanischen Druck des Tubus (40) gegen den Endabschnitt des Temperatursensors (20) bestimmt.

2. Detektionsvorrichtung zur Detektion der Temperatur in einem Kochtopf (11), wobei der Kochtopf einen Container (15) aufweist, der geeignet ist, Nahrung, die gekocht oder erhitzt werden soll, aufzunehmen, mit welchem Container (15) ein elektrischer Widerstand (17) verbunden ist, wobei die Detektionsvorrichtung einen Temperatursensor (20) umfasst, welcher geeignet ist, in der Nähe des oder in Kontakt mit dem Container (15) angeordnet zu sein, und wobei der Temperatursensor (15) mit einem aufnehmenden Element (21) versehen ist, wobei Dichtmittel mit diesem aufnehmenden Element (21) verbunden sind, um eine wasserdichte Dichtung des Temperatursensors (20) zu erreichen, **dadurch gekennzeichnet, dass** die Dichtmittel zwischen diesem aufnehmenden Element (21) und einem Schließelement (35) positioniert sind und einen Tubus (40), der aus elastischem Material geformt ist, umfassen, wobei der hohle Innenraum zur Aufnahme eines Endabschnitts dieses Temperatursensors (20) geeignet ist, wobei der Tubus (40) axial zwischen dieses aufnehmende Element (21) und dieses Schließelement (35) eingeführt ist, wobei Vorschubmittel auf einem Zwischenelement (29) vorgesehen sind, positioniert zwischen dem aufnehmenden Element (21) und dem Schlie-ßelement (35) und longitudinal um diesen Tubus (40) angeordnet, um mit einer konischen Innenoberfläche (41) dieses Schließelements (35) zusammenzuwirken, um diesen Tubus (40) radial und mechanisch gegen den Endabschnitt dieses Temperatursensors (20) gedrückt zu halten, wobei dieses aufnehmende Element (21) in seinem unteren und äußeren Abschnitt mit einem Gewinde (25), auf welches ein Innengewinde dieses Schließelements (35) aufgeschraubt werden kann, vorgesehen ist, wobei das Schrauben des Schließelements (35) auf das aufnehmende Element (21) den radialen und mechanischen Druck des Tubus (40) gegen den Endabschnitt des Temperatursensors (20) bestimmt.

3. Vorrichtung nach Anspruch 2, **dadurch gekennzeichnet, dass** dieser Tubus (40) eine abgeschnittene konische Form aufweist und Vorschubmittel eine Mehrzahl von flexiblen "Finger" ("fins") (31) enthalten, die auf diesem Zwischenelement (29) vorgesehen sind.

4. Vorrichtung nach Anspruch 3, **dadurch gekennzeichnet, dass** die konische Innenoberfläche (41) dieses Schließelements (35) geeignet ist, mechanisch diesen Tubus (40) gegen den unteren Abschnitt dieses aufnehmenden Elements (21) vorzuschieben.

5. Vorrichtung nach Anspruch 2, 3 oder 4, **dadurch gekennzeichnet, dass** die Dichtmittel auch einen Ring (42), der aus elastischem Material geformt ist, zwischen diesem aufnehmenden Element (21) und dem Zwischenelement (29) positioniert, umfassen.

6. Vorrichtung nach Anspruch 3, **dadurch gekennzeichnet, dass** die flexiblen "Finger" (31) in dem unteren Abschnitt dieses Zwischenelements (29) angeordnet sind.

7. Vorrichtung nach Anspruch 3, **dadurch gekennzeichnet, dass** der untere Abschnitt dieses aufnehmenden Elements (21) mit dem Außengewinde (25) vorgesehen ist, auf welches ein korrespondierendes Innengewinde (26) dieses Zwischenelements (29) geeignet geschraubt werden kann, und dadurch, dass das Zwischenelement (29) mit einem Außengewinde (32) vorgesehen ist, auf welches ein korrespondierendes Innengewinde (33) dieses Schließelements (35) geeignet geschraubt werden kann.

8. Vorrichtung nach Anspruch 2, **dadurch gekennzeichnet, dass** dieses Zwischenelement (29) mit einer durchgehenden axialen Kavität (30) vorgesehen ist, in welches sowohl ein Abschnitt dieses aufnehmenden Elements (21) als auch ein Abschnitt dieses Tubus (40) geeignet aufgenommen werden können.

9. Vorrichtung nach irgendeinem vorbezeichneten Anspruch, **dadurch gekennzeichnet, dass** die Dichtmittel ein Abdeckelement (50) umfassen, welches mindestens einen Abschnitt dieses aufnehmenden Elements (21) und einen Endabschnitt dieses Temperatursensors (20), aus dem aufnehmenden Element (21) herausragend, einschließt.

10. Vorrichtung nach Anspruch 9, **dadurch gekennzeichnet, dass** dieses Abdeckelement (50) aus einem doppelt gepfropften Gummi geformt ist.

## Revendications

1. Dispositif de détection pour détecter la température dans un appareil de cuisson (11), ledit appareil de cuisson comportant un récipient (15) apte à contenir l'aliment à cuire ou réchauffer, une résistance électrique (17) étant associée audit récipient (15), ledit dispositif de détection comprenant un capteur de température (20) apte à être placé à proximité de ou en contact avec ledit récipient (15), et ledit capteur de température (15) étant pourvu d'un élément de logement (21), dans lequel des moyens d'étanchéité sont associés audit élément de logement (21) pour garantir l'étanchéité à l'eau dudit capteur de température (20), **caractérisé en ce que** lesdits moyens d'étanchéité sont interposés entre ledit élément de logement (21) est un élément de fermeture (35) et comprennent un tuyau (40) en matière élastique, creux à l'intérieur pour recevoir une partie terminale dudit capteur de température (20), ledit tuyau (40) étant inséré en direction axiale entre ledit élément de logement (21) et ledit élément de fermeture (35), des moyens de poussée étant prévus pour maintenir ledit tuyau (40) sous pression mécanique en direction radiale contre ladite partie terminale dudit capteur de température (20), dans lequel le dit élément de logement (21) est pourvu sur sa partie inférieure et extérieure d'un filet (25) sur lequel un filet intérieur dudit élément de fermeture (35) peut être vissé, le vissage de l'élément de fermeture (35) sur l'élément de logement (21) déterminant la pression mécanique radiale du tuyau (40) contre la partie terminale du capteur de température (20).

2. Dispositif de détection pour détecter la température dans un appareil de cuisson (11), ledit appareil de cuisson comportant un récipient (15) apte à contenir l'aliment à cuire ou réchauffer, une résistance électrique (17) étant associée audit récipient (15), ledit dispositif de détection comprenant un capteur de température (20) apte à être placé à proximité de ou en contact avec ledit récipient (15), et ledit capteur de température (15) étant pourvu d'un élément de logement (21), dans lequel des moyens d'étanchéité sont associés audit élément de logement (21) pour garantir l'étanchéité à l'eau dudit capteur de température (20), **caractérisé en ce que** lesdits moyens d'étanchéité sont interposés entre ledit élément de logement (21) est un élément de fermeture (35) et comprennent un tuyau (40) en matière élastique, creux à l'intérieur pour recevoir une partie terminale dudit capteur de température (20), ledit tuyau (40) étant inséré en direction axiale entre ledit élément de logement (21) et ledit élément de fermeture (35), des moyens de poussée étant prévus sur un élément intermédiaire (29), interposé entre le dit élément de logement (21) et le dit élément de fermeture (35), et disposé longitudinalement autour dudit tuyau (40) pour coopérer avec une surface intérieure conique (41) dudit élément de fermeture (35), pour maintenir ledit tuyau (40) sous pression mécanique en direction radiale contre ladite partie terminale dudit capteur de température (20), dans lequel le dit élément de logement (21) est pourvu sur sa partie inférieure et extérieure d'un filet (25) sur lequel un filet intérieur dudit élément de fermeture (35) peut être vissé, le vissage de l'élément de fermeture (35) sur l'élément de logement (21) déterminant la pression mécanique radiale du tuyau (40) contre la partie terminale du capteur de température (20).

3. Dispositif selon la revendication 2, **caractérisé en ce que** ledit tuyau (40) présente une forme tronconique et les moyens de poussée comprennent une pluralité d'ailettes flexibles (31) agencées sur ledit élément intermédiaire (29).

4. Dispositif selon la revendication 3, **caractérisé en ce que** ladite surface intérieure conique (41) dudit élément de fermeture (35) est apte à exercer une pression mécanique sur ledit tuyau (40) contre la partie inférieure dudit élément de logement (21).

5. Dispositif selon la revendication 2, 3 ou 4, **caractérisé en ce que** lesdits moyens d'étanchéité comprennent également une bague (42) en matière élastique interposée entre ledit élément de logement (21) et le dit élément intermédiaire (29).

6. Dispositif selon la revendication 3, **caractérisé en ce que** lesdites ailettes flexibles (31) sont agencées dans la partie inférieure dudit élément intermédiaire (29).

7. Dispositif selon la revendication 3, **caractérisé en ce que** la partie inférieure dudit élément de logement (21) est pourvue du filet extérieur (25), sur lequel un filet intérieur (26) correspondant dudit élément intermédiaire (29) est apte à être vissé, et **en ce que** ledit élément intermédiaire (29) est pourvu d'un filet extérieur (32), sur lequel un filet intérieur (33) correspondant dudit élément de fermeture (35) est apte à être vissé.

8. Dispositif selon la revendication 2, **caractérisé en ce que** ledit élément intermédiaire (29) est pourvu d'une cavité axiale débouchante (30) dans laquelle une partie dudit élément de logement (21) et une partie dudit tuyau (40) sont aptes à être logées.

9. Dispositif selon l'importe laquelle des revendications précédentes, **caractérisé en ce que** lesdits moyens d'étanchéité comprennent un élément de couverture (50) incorporant au moins une partie dudit élément de logement (21) et une partie terminale dudit capteur de température (20) faisant saillie dudit élément de logement (21).

10. Dispositif selon la revendication 9, **caractérisé en ce que** ledit élément de couverture (50) est en caoutchouc surmoulé.
